Europäisches Patentamt

European Patent Office

Office européen des brevets

(11) Veröffentlichungsnummer: **0 243 628**
**B1**

(12) **EUROPÄISCHE PATENTSCHRIFT**

(45) Veröffentlichungstag der Patentschrift: **09.05.90**

(21) Anmeldenummer: **87103380.9**

(22) Anmeldetag: **10.03.87**

(51) Int. Cl.[5]: **F 16 J 15/40,** F 16 J 15/16,
D 06 B 23/00

(54) Abdichtung von Apparaten bei kontinuierlicher Produktförderung.

(30) Priorität: **22.03.86 DE 3609858**

(43) Veröffentlichungstag der Anmeldung:
**04.11.87 Patentblatt 87/45**

(45) Bekanntmachung des Hinweises auf die
Patenterteilung:
**09.05.90 Patentblatt 90/19**

(84) Benannte Vertragsstaaten:
**DE ES FR GB IT NL**

(56) Entgegenhaltungen:
EP-A-0 086 728
DE-B-2 633 981
US-A-3 475 034
US-A-3 868 104

(73) Patentinhaber: **BAYER AG**
**D-5090 Leverkusen 1 Bayerwerk (DE)**

(72) Erfinder: **Wagner, Wolfram, Dr.**
**Zeisigweg 9**
**D-4047 Dormagen 1 (DE)**
Erfinder: **Nyssen, Peter Roger, Dipl.-Ing.**
**Magnolienstrasse 6**
**D-4047 Dormagen 11 (DE)**
Erfinder: **Paulini, Dieter, Dipl.-Ing.**
**Im Mühlenend 46**
**D-4047 Dormagen (DE)**
Erfinder: **Berkenhaus, Dirk, Ing.-grad.**
**Urftstrasse 31**
**D-5000 Köln 50 (DE)**
Erfinder: **Kulisch, Siegfried**
**Nievenheimer Strasse 9**
**D-4047 Dormagen 5 (DE)**

Courier Press, Leamington Spa, England.

## Beschreibung

Die Erfindung betrifft ein Verfahren zum Abdichten eines Durchganges für eine Förderung von vorzugsweise endlosen Produkten—wie Fasern oder Folienbänder—durch eine Wand in einen Raum, welcher durch ein darin enthaltendes dampf- oder gasförmiges Medium einen zum Außendruck vor der Wand unterschiedlichen Druck besitzt und eine Vorrichtung zur Durchführung des Verfahrens.

Zur Erzielung bestimmter Produkteigenschaften von Fasern und Folienbändern sind Verfahrensstufe—wie Verstreckung, Dämpfung oder Relaxation—erforderlich, die bei Dampftemperaturen von 100°C bis 150°C unter einem Druck von 1—2,5 bar in einer geschlossenen Kammer durchgeführt werden. Andererseits fallen diese endlosen Produkte meist kontinuierlich an, so daß eine unmittelbare Weiterbehandlung in wirtschaftlicher und qualitätsmäßiger Hinsicht von Vorteil ist. Dabei entstehen bei der Ein- und Ausführung der Produkte in die unter Überdruck stehende Kammer Verluste durch den in die Umgebung austretenden Dampf, die unerwünscht sind.

Bekannt sind Walzen- oder Labyrinthdichtungen, bei denen das Produkt zwischen mehr oder minder nachgiebigen Sperren in die Kammer ein- oder ausgeführt wird (s. z. B. DE—B—2 633 981). Der Nachteil dieser Vorrichtungen besteht darin, daß neben einer unvollständigen Absperrung und hohem Verschleiß vor allen Dingen Produktschädigungen eintreten können.

Aufgabe der Erfindung ist es, eine Abdichtung zu finden, die beim Durchtritt eines vorzugsweise berührungslos und kontinuierlich gefördeten Produktes durch eine Wand einen Fluß eines unter Überdruck stehenden Dampfes bzw. Gases von einer zur anderen Seite verhindert, einen Verschleiß der Vorrichtung weitgehend vermeidet, eine schnelle Anpaßbarkeit an verschiedene Betriebsbedingungen erlaubt, eine Beschädigung des Produkts ausschließt und eine einfache Wartung ermöglicht.

Die Aufgabe wird erfindungsgemäß dadurch gelöst, daß eine im Durchgang nahezu parallel zum Förderweg und in Richtung des höheren Druckes fließende Strömung aus einem dampf- oder gasförmigen Mittel mit einer Geschwindigkeit eingeleitet wird, die anschließend durch teilweise Reduzierung auf dem weiteren räumlich begrenzten Weg in einen solchen Druck umgesetzt wird, der dem entgegenstehenden Druck in dem Raum etwa entspricht und daß an der Eintrittsstelle des Mittels in dem räumlich begrenzten Weg der Druck über die Geschwindigkeit so eingestellt wird, daß er etwa dem Vordruck vor der Wand entspricht.

Durch das erfindungsgemäße Verfahren ist es möglich ein endloses Produkt ohne kontaktieren von Konstruktionselementen durch eine geschlossene Wand zwischen zwei Räumen mit unterschiedlichem Druck hindurchzufördern, ohne daß beispielsweise die teuren Medien zur Behandlung wie Gase oder Dampf in Folge des Druckgefälles durch diesen Durchgang entweichen, wodurch hohe Kosten bzw, eine starke Belastung der Umwelt vermieden wird. Schon durch das Einleiten geringer Mengen an Mittel kann ein Abfließen des Mediums bei den in der Produktion vorkommenden Druckunterschiede von 0,1—5 bar, insbesondere 1—2,5 bar, vermieden werden. Wenn die Berührung der flachen Bänder mit den Durchgangswänden vermieden werden soll, haben sich Weiten zwischen dem 1,2 bis 5-fachen, insbesondere zwischen dem 1,5 bis 3-fachen, der Banddicke als günstig herausgestellt, wobei Folienbänder gegenüber Faserbändern im allgemeinen kleinere Weiten benötigen.

Durch Beschleunigung des Mittels in einer Lavaldüse werden an der Eintrittsstelle Geschwindigkeiten zwischen 1 bis 3 Mach oder auch höher erreicht, die einerseits erlauben einen Druck einzustellen, der dem Außendruck (normalerweise 1 atü) im Bereich vor dem Durchgang entspricht und andererseits durch Rückgewinnung der kinetischen Energie einen solchen Druck am Ende des Durchganges aufzubauen, wie er für die Behandlung des Produktes in der Kammer erforderlich ist. Sobald kein Druckgefälle zu den benachbarten Räumen mehr vorhanden ist, wirkt der Durchgang wie eine Sperre.

Durch Verdichtungsstöße in einem nach der Eintrittsstelle folgenden konvergenten Abschnitt mit geringer Neigung (5° wird der Druck verlustarm—bezogen auf den Diffusor mit hohen Reibungsverlusten—auf kurzem Wege zurückgewonnen, wobei die ursprünglich schrägen Verdichtungsstöße spätestens im folgenden geraden Abschnitt mit einer Länge bis zu 20 mm, insbesondere bis zu 14 mm in geraden Verdichtungsstößen auslaufen, um nach Unterschreiten der Schallgrenze in diesem Abschnitt noch beruhigt zu werden. Die Druckrückgewinnung wird so ausgelegt, daß der Wirkungsgrad der konvergierenden Strömung zwischen 0,4 bis 0,8, vorzugsweise zwischen 0,7 bis 0,8 liegt, wobei unter Wirkungsgrad zu verstehen ist:

$$\eta = \frac{\ln \dfrac{P_2}{P_1}}{\dfrac{x}{x-1} \ln \dfrac{\dfrac{2x}{x-1} R \cdot T_R - v_2^2}{\dfrac{2x}{x-1} R \, T_R - v_1^2}}$$

Es bedeuten $P_1$ und $P_2$ den Druck bzw. $v_1$ und $v_2$ die Geschwindigkeit am Anfang und Ende des konvergenten Abschnittes, während $T_R$ die Ruhetemperatur im Kanal ist. Die anderen beiden Werte R=Gaskonstante und x=Isentropenexponent werden im üblichen Sinne gebraucht.

Am Ende des Durchganges wird die Strömung in einem Diffusor bei gleichzeitiger Anpassung an den Druck in der Kammer beruhigt, wobei in rechteckigen Querschnitten ein Winkel von 5—8° und in runden Querschnitten ein Winkel von 6—10° keinen nachteiligen Einfluß der Strömung auf das Spinnband mehr ausgeübt wird.

Wenn das Mittel mit einem Impulsstrom $\dot{m} \cdot v_1$ mit $\dot{m}$ =Massestrom und $v_1$ =Gasgeschwindigkeit an der Eintrittsstelle versehen wird, der das 0,4—0,8-fache, vorzugsweise 0,6—0,75-fache des Produktes aus $A_3 \cdot P_4$ mit $A_3$ kleinster Querschnitt des Diffusors und $P_4$ =Druck des Mediums in der Kammer beträgt, läßt sich beispielsweise bei Vorgabe der anderen Daten ein Querschnitt $A_3$ ermitteln, bei dem sich eine einwandfreie Strömung unter optimaler Druckumsetzung ausbilden kann.

Durch Einsatz eines Mittels zum Abdichten, welches auch in der Kammer als Medium verwendet wird, treten keine Mischungsprobleme in der Kammer auf. Die Rückgewinnung des Mittels für das Fahren in einem Kreislauf wird vereinfacht, was wesentliche Vorteile bei umweltschädigenden Mitteln bzw. Medien bringt.

Weiter können durch Einsatz von Mitteln mit gegenüber dem Medium größerem Molekulargewicht die Impulskräfte vergrößert werden, so daß dann schon kleine Mengen bzw. geringere Geschwindigkeiten des Mittels zum Abdichten ausreichen.

Durch Abdichten in zwei Stufen ist es möglich, zuerst mit einem billigen Mittel den Druck in einer Schleuse anzuheben, um dann mit einem Medium, welches zur Behandlung der Produkte in der Kammer eingesetzt wird, bei nur wegen des geringen Druckunterschiedes kleinen Mengeneinsatzes den zweiten Durchgang zu sperren.

In einer erfindungsgemäßen Vorrichtung wird die Aufgabe dadurch gelöst, daß im Randbereich des Durchganges in der Wand Zuführungen für das Mittel angeordnet sind, die in Richtung des Durchganges zeigen, der mindestens im letzten Abschnitt divergent ausgebildet ist.

Die erfindungsgemäße Vorrichtung erlaubt eine einwandfreie Abdichtung über einen Luftstrom, in dem das Produkt ohne Berührung mit festen Teilen verschleißfrei durch eine Wand einer geschlossenen Kammer geführt werden kann, ohne daß das dort unter höherem Druck vorhandene Medium den Durchgang passieren kann. Die lichten Abmessungen des Durchganges sind entsprechend den praktischen Erfordernissen einstellbar. Sie hängen beispielsweise davon ab, ob das Band glatt oder flauschig ist. Ein besonderer Vorteil ist die verhältnismäßig kurze Bauart, die einen Einbau in jede Wand erlaubt. Die Wartung ist insbesondere wegen fehlender drehender Teile sehr einfach.

Mit Hilfe der beanspruchten Lavaldüse kann jede geforderte Schall- bzw. Überschallgeschwindigkeit erzeugt werden. Die Zuführungen münden in einen konvergenten Abschnitt, der durch Verdichtungsstöße für eine verlustarme schnelle Umsetzung der kinetischen Energie in den geforderten Bereich sorgt. Während im kurzen anschließenden Abschnitt mit gleichem Querschnitt das Mittel schnell beruhigt wird.

Als Mittel können mit einem Druck von 1—10 atü Dampf, inerte (Stickstoff, Edelgase) oder andere Gase (Luft, Formiergas) eingesetzt werden, wobei als Mittel ein Stoff bevorzugt wird, der gleichzeitig als Medium zur kontinuierlichen Behandlung von faserförmigen Produkten wie Verstreckung, Relaxierung, Fixierung oder Formgebung verwendet werden kann.

Beispiele der Erfindung sind in den Zeichnungen dargestellt und werden im folgenden näher beschrieben. Es zeigen:

Fig. 1 Schema einer Anlage mit Durchgängen
Fig. 2 Schnitt durch einen Durchgang
Fig. 3 Ausschnitt durch einen Durchgang
Fig. 4 Ausschnitt durch einen Durchgang

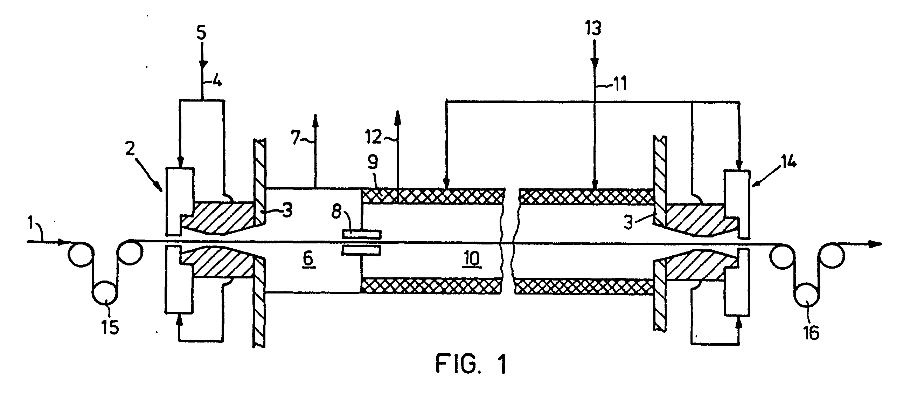

In Fig. 1 ist ein Schema einer Anlage zur Behandlung von Produkten 1—wie Spinnbänder——dargestellt, die aus einem Durchgang 2 in einer Wand 3 mit Zuführkanälen 4 für Luft als Mittel 5, einer Vorkammer 6 mit Abführkanal 7 für die Luft, einer Schleuse 8, einem durch Wärmedämmung 9 geschützten Raum 10, einer Kammer mit Zuleitung 11 und Ableitung 12 für das Medium 13 (Dampf) und einem Durchgang 14 mit Zuleitung 11 für Dampf besteht.

Das Spinnband 1 wird durch Lieferwerk 15 frei schwebend über Durchgang 2 in die Vorkammer 6 eingeführt, von wo es über Schleuse 8 in die Kammer 10 gelangt wo es unter anderem mit dem Medium 13 behandelt wird. Der Abzug des Spinnbandes 1 erfolgt frei schwebend über Durchgang 14 mittels Abzugswerk 16.

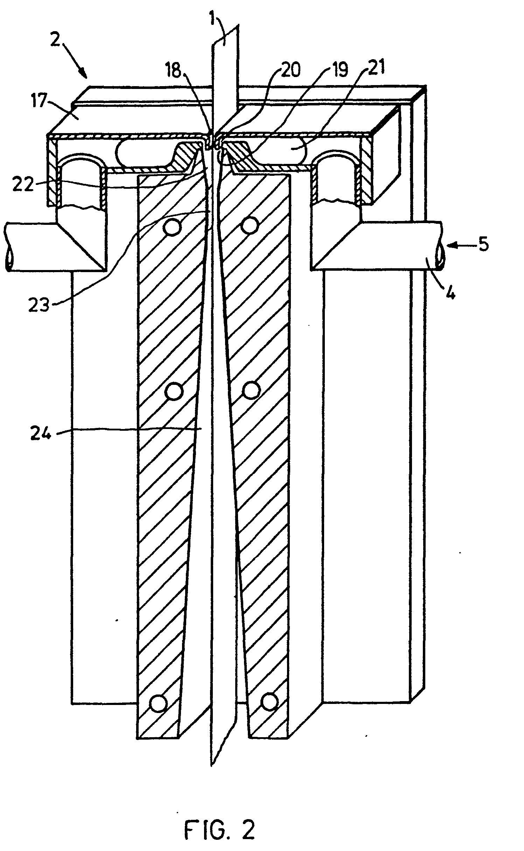

In Fig. 2 ist ein Durchgang 2 im Detail gezeichnet. Der Durchgang besteht aus einem Kopf 17 mit länglichem Schlitz 18 für das mittig laufende Spinnband 1, der an den Rändern Eintrittsstellen 19 von in Richtung der Kammer 10 etwa parallel zur Hauptsymmetrieebene ausgerichtete Zuführungen 20 in Form von Lavaldüsen zur Erzeugung der Überschallgeschwindigkeit besitzt, die über Verteiler 21 und Zuführkanäle 4 aus einem (nicht dargestellten) Behälter mit Mittel 5 gespeist werden. Der Schlitz 18 mit beidseitigen Zuführungen 20 mündet in einem konvergenten Abschnitt 22 für die Verdichtungsstöße, an den sich wiederum ein gerader Abschnitt 23 mit gleichbleibendem Querschnitt zur Beruhigung der Unterschallströmung anschließt, welchem wiederum ein Diffusor 24 folgt.

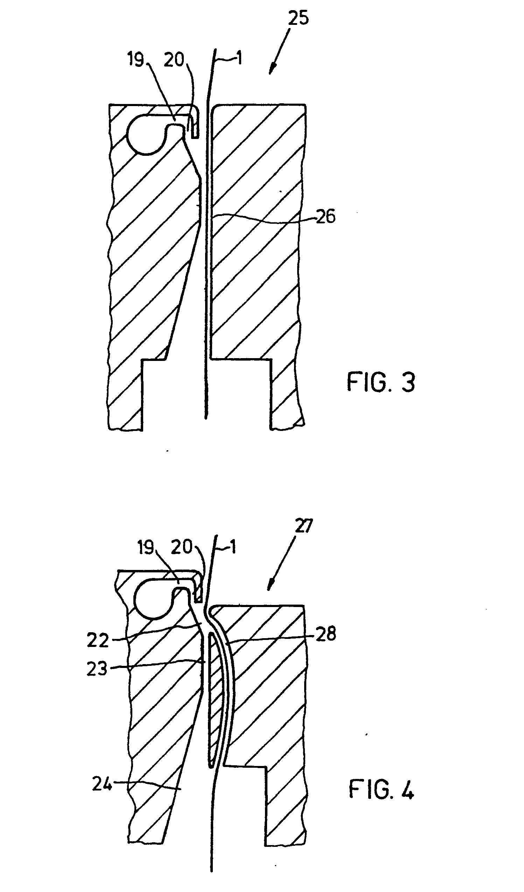

In Fig. 3 ist ein asymmetrischer Durchgang 25 gezeigt, bei dem das Spinnband 1 direkt an einer Seite 26 des Durchganges 25, die keine Zuführung 20 enthält, anliegt.

In Fig. 4 ist ebenfalls ein asymmetrischer Durchgang 27 dargestellt, bei dem das wenig strapazierfähige Spinnband 1 ab einem bestimmten Punkt in einem gesonderten Kanal 28 geführt wird, wobei der eigentliche Durchgang 27 wie üblich als Abdichtung wirkt und gleichzeitig der Zufuhr von Mittel 5 als Medium 13 dient.

**Patentansprüche**

1. Verfahren zum Abdichten eines Durchganges für eine Förderung vorzugsweise von endlosen Produkten—wie Fasern oder Folienbänder (1)—durch eine Wand (3) in einem Raum (10), welcher durch ein darin enthaltendes dampf- oder gasförmiges Medium einen zum Außendruck vor der Wand (3) unterschiedlichen Druck besitzt, dadurch gekennzeichnet, daß eine im Durchgang (2, 14, 25, 27) nahezu parallel zum Förderweg des endlosen Produktes fließende Strömung aus einem damp- oder gasförmigen Mittel (5) mit einer Geschwindigkeit eingeleitet wird, die anschließend durch teilweise Reduzierung auf dem weiteren räumlich begrenzten Weg (22, 23, 24) in einen solchen Druck umgesetzt wird, der dem entgegenstehenden Druck in dem Raum (10) etwa entspricht, und daß an der Eintrittsstelle (19) des Mittels (5) in den räumlich begrenzten Weg (22, 23, 24) der Druck über die Geschwindigkeit so eingestellt wird, daß er etwa dem Vordruck vor der Wand (3) entspricht.

2. Verfahren nach Anspruch 1, dadurch gekennzeichnet, daß das Mittel (5) an der Eintrittsstelle (19) in einer Lavaldüse (20) auf Überschallgeschwindigkeit beschleunigt wird.

3. Verfahren nach Ansprüchen 1—2, dadurch gekennzeichnet, daß als maximale Geschwindigkeit 1—3 Mach—insbesondere 1,5—2,5 Mach—eingestellt wird.

4. Verfahren nach Ansprüchen 1—3, dadurch gekennzeichnet, daß die Strömung in einem Konvergenten Abschnitt (22) verzögert wird.

5. Verfahren nach Ansprüchen 1—4, dadurch gekennzeichnet, daß die Zunahme des Druckes im Überschallbereich des konvergenten Abschnittes (22) durch einen oder mehrere Verdichtungsstöße erzeugt wird.

6. Verfahren nach Ansprüchen 1—5, dadurch gekennzeichnet, daß die Strömung in einem Abschnitt (23) mit gleichbleibendem Querschnitt als räumlich begrenzter Weg mit einer Länge von 0—20 mm, insbesondere 0—14 mm, geführt wird.

7. Verfahren nach Ansprüchen 1—6, dadurch gekennzeichnet, daß die Strömung in einem Diffusor (24) als räumlich begrenzter Weg unter einem Winkel bei rechteckigem Querschnitt von 5—8° bzw. bei rundem Querschnitt von 6—10° erweitert wird.

8. Verfahren nach Ansprüchen 1—7, dadurch gekennzeichnet, daß ein Impulsstrom $\dot{m} \cdot v_1$ mit $\dot{m}$=Massestrom und $v_1$=Gasgeschwindigkeit aus Mittel (5) an der Eintrittsstelle (19) eingesetzt wird, der das 0,4 bis 0,8-fache, vorzugsweise 0,6 bis 0,75-fache, des Produktes aus $A_3 \cdot P_2$ mit $A_3$=kleinster Querschnitt des Unterschalldiffusors (24) und $P_2$=Druck des Mediums (13) beträgt.

9. Verfahren nach Ansprüchen 1—8, dadurch gekennzeichnet, daß zum Abdichten das Mittel (5) eingesetzt wird, welches auch in der Kammer (10) als Medium (13) verwendet wird.

10. Verfahren nach Ansprüchen 1—9, dadurch gekennzeichnet, daß zum Abdichten ein Mittel (5) mit einer Dichte, die größer als die Dichte des Mediums (13) in der Kammer (10) ist, verwendet wird.

11. Verfahren nach Ansprüchen 1—10, dadurch gekennzeichnet, daß das Abdichten in mehreren Stufen eventuell mit unterschiedlichen Mitteln (5) erfolgt.

12. Vorrichtung zur Durchführung des Verfahrens gemäß Ansprüchen 1—11, dadurch gekennzeichnet, daß im Randbereich des Durchganges (2, 14, 25, 27) in der Wand (3) Zuführungen (20) für das Mittel (5) angeordnet sind, die nahezu parallel in Richtung des Durchganges (2, 14, 25, 27) zeigen, der mindestens im letzten Abschnitt (24) divergent ausgebildet ist.

13. Vorrichtung nach Anspruch 12, dadurch gekennzeichnet, daß die Zuführung (20) für das Mittel (5) die Form einer Lavaldüse besitzt.

14. Vorrichtung nach Ansprüchen 12—13, dadurch gekennzeichnet, daß der Durchgang (2, 14, 25, 27) hinter den Zuführungen (20) auf einem Abschnitt (22) konvergent ausgebildet ist.

15. Vorrichtung nach Ansprüchen 12—14, dadurch gekennzeichnet, daß der Durchgang (2, 14, 25, 27) mindestens auf einem Abschnitt (23) einen konstanten Querschnitt besitzt.

## Revendications

1. Procédé pour réaliser l'étanchéité d'un passage pour un transport, de préférence de produits sans fin—comme des rubans de fibres ou de feuilles (1)—à travers une paroi (3) dans un espace (10) dans lequel règne une pression différente de la pression extérieure existant en amont de la paroi (3) du fait d'un médium qu'il contient sous forme de vapeur ou de gaz, caractérisé en ce que l'on provoque un flux d'un fluide (5) sous forme de vapeur ou de gaz qui s'écoule dans le passage (2, 14, 25, 27) presque parallèlement au chemin de transport du produit sans fin, avec une vitesse qui est ensuite convertie, par réduction partielle sur le chemin, par la suite limité spatialement (22, 23, 24), en une pression qui correspond à peu près à la pression opposée qui règne dans l'espace (10); et en ce qu'à la position d'entrée (19) du fluide (5) sur le chemin limité spatialement (22, 23, 24), on règle la pression en fonction de la vitesse de façon qu'elle corresponde à peu près à la pression existant en amont de la paroi (3).

2. Procédé selon la revendication 1, caractérisé en ce que, à la position d'entrée (19), on accélère le fluide dans une tuyère de Laval (20) pour l'amener à vitesse supersonique.

3. Procédé selon la revendication 1—2, caractérisé en ce que comme vitesse maximale on se règle sur une vitesse de 1—3 Mach—en particulier 1,5—2,5 Mach.

4. Procédé selon la revendication 1—3, caractérisé en ce que le flux est ralenti dans un tronçon formant convergent (22).

5. Procédé selon les revendications 1—4, caractérisé en ce que l'accroissement de la pression dans la zone supersonique du tronçon formant convergent (22) est produit par un ou plusieurs fronts de compression.

6. Procédé selon la revendication 1—5, caractérisé en ce que le flux passe dans un tronçon (23) de section constante formant chemin limité spatialement, d'une longueur de 0—20 mm, en particulier 0—14 mm.

7. Procédé selon la revendication 1—6, caractérisé en ce que le flux s'élargit dans un diffuseur (24) formant chemin limité spatialement, sous un angle de 5—8° dans le cas d'une section rectangulaire ou de 6—10° dans le cas d'une section ronde.

8. Procédé selon la revendication 1—7, caractérisé en ce qu'à la position d'entrée (19) on crée une quantité de mouvement $\dot{m} \cdot v_1$ avec $\dot{m}$ =débit massique et $v_1$=vitesse du fluide gazeux (5), qui présente 0,4 à 0,8 fois, de préférence 0,6 à 0,75 fois le produit de $A_3 \cdot P_2$ avec $A_3$=plus petite section du diffuseur subsonique (24) et $P_2$=pression du médium (13).

9. Procédé selon la revendication 1—8, caractérisé en ce que pour assurer l'étanchéité on utilise le fluide (5) qui est employé dans la chambre (10) comme médium (13).

10. Procédé selon les revendication 1—9, caractérisé en ce que pour assurer l'étanchéité on utilisé un fluide (5) de densité supérieure à la densité du médium (13) qui se trouve dans la chambre (10).

11. Procédé selon la revendication 1—10, caractérisé en ce que l'étanchéité se fait en plusieurs échelons, éventuellement avec des fluides (5) différents.

12. Dispositif pour l'exécution du procédé selon les revendications 1—11, caractérisé en ce que dans la zone de bordure du passage (2, 14, 25, 27) sont disposés, pour le fluide (5), dans la paroi (3) des guidages d'amenée (20) qui sont dirigés à peu près parallèlement en direction du passage (2, 14, 25, 27) qui, au moins dans le dernier tronçon (24), forme un divergent.

13. Dispositif selon la revendication 12, caractérisé en ce que le guidage d'amenée (20) pour le fluide (5) possède la forme d'une tuyère de Laval.

14. Dispositif selon les revendications 12—13, caractérisé en ce que, derrière les guidage d'amenée (20), le passage (2, 14, 25, 27) forme un convergent sur un tronçon (22).

15. Dispositif selon les revendications 12—14, caractérisé en ce que le passage (2, 14, 25, 27) possède, au moins sur un tronçon (23), une section constante.

## Claims

1. Process for sealing a passage for transport of preferably, continuous products—such as fibres or film tapes (1)—through a wall (3) into a space (10) which has a pressure which differs from the external pressure in front of the wall (3) owing to the presence of a vapour or gas medium in the said space, characterised in that a stream of a vapour or gaseous agent (5) flowing in the passage (2, 14, 25, 27) virtually parallel to the transport path of the continuous product is passed in at a speed which is subsequently converted, by partial reduction along the further spatially constricted path (22, 23, 24), into a pressure which approximately corresponds to the opposing pressure in the space (10), and that the pressure at the entry point (19) of the agent (5) into the spatially constricted path (22, 23, 24) is adjusted via the speed in such a way that it corresponds approximately to the initial pressure in front of the wall (3).

2. Process according to Claim 1, characterised in that the agent (5) is accelerated to supersonic speed at the entry point (19) in a Laval nozzle (20).

3. Process according to Claims 1—2, characterised in that 1—3 mach—in particular 1.5—2.5 mach—is set as the maximum speed.

4. Process according to Claims 1—3, characterized in that the flow is decelerated in a convergent section (22).

5. Process according to Claims 1—4, characterised in that the increase in pressure in the ultrasonic region of the convergent section (22) is produced by one or more compression impacts.

6. Process according to Claims 1—5, characterised in that the stream passes through a section (23) having a constant cross-section, as a spatially constricted path with a length of 0.20 mm, in particular 0—14 mm.

7. Process according to Claims 1—6, characterised in that the stream is expanded in a diffusor (24) as a spatially constricted path at an angle, with a rectangular cross-section of 5—8° or with a circular cross-section of 6—10°.

8. Process according to Claims 1—7, characterised in that a pulsed flow $\dot{m} \cdot v_1$, where $\dot{m}$=mass flow and $v_1$=gas velocity, of agent (5) is used at the entry point (19), the said pulse stream being 0.4 to 0.8 times, preferably 0.6 to 0.75 times, the product of $A_3 \cdot P_2$, where $A_3$=smallest cross-section of the ultrasonic diffusor (24) and $P_2$=pressure of the medium (13).

9. Process according to Claims 1—8, characterised in that the agent (5), which is also used in the chamber (10), as a medium (13) is employed for sealing.

10. Process according to Claims 1—9, characterised in that an agent (5) having a density which is greater than the density of the medium (13) in the chamber (10) is used for sealing.

11. Process according to Claims 1—10, characterised in that sealing is effected in several stages, possibly with different agents (5).

12. Apparatus for carrying out the process according to Claims 1—11, characterised in that, in the edge region of the passage (2, 14, 25, 27) in the wall (3), ducts (20) for the agent (5) are arranged, the said ducts running virtually parallel to the passage (2, 14, 25, 27), which has a divergent form at least in the last section (24).

13. Apparatus according to Claim 12, characterised in that the duct (20) for the agent (5) has the shape of a Laval nozzle.

14. Apparatus according to Claims 12—13, characterised in that the passage (2, 14, 25, 27) is convergent behind the ducts (20), in a section (22).

15. Apparatus according to Claims 12—14, characterised in that the passage (2, 14, 25, 27) has a constant cross-section in at least one section (23).

FIG. 1

FIG. 2

FIG. 3

FIG. 4